(19)

Europäisches Patentamt
European Patent Office
Office européen des brevets

(11) EP 2 704 440 A2

(12) EUROPEAN PATENT APPLICATION

(43) Date of publication:
05.03.2014 Bulletin 2014/10

(51) Int Cl.:
H04N 19/33 (2014.01)   H04N 19/187 (2014.01)
H04N 19/59 (2014.01)   H04N 19/61 (2014.01)

(21) Application number: 13157130.9

(22) Date of filing: 28.02.2013

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME

(30) Priority: 04.09.2012 US 201261696531 P

(71) Applicant: BlackBerry Limited
Waterloo, ON N2K 0A7 (CA)

(72) Inventors:
• Wang, Jing
Waterloo, Ontario N2L 3W8 (CA)
• He, Dake
Waterloo, Ontario N2L 3W8 (CA)
• Yu, Xiang
Kitchener, Ontario N2N 3R5 (CA)
• Ji, Tianying
Mississauga, Ontario L4W 0B5 (CA)

(74) Representative: Patel, Binesh
Barker Brettell LLP
100 Hagley Road
Edgbaston
Birmingham West Midlands
B16 8QQ (GB)

(54) **Methods and devices for inter-layer prediction in scalable video compression**

(57)   Methods and devices for encoding and decoding scalable video are described. In one aspect, a method of reconstructing, in a video decoder, an enhancement-layer image based upon a reconstructed reference-layer image using inter-layer prediction is described. The method includes reconstructing a reference-layer residual and a reference-layer prediction, wherein the reference-layer residual and the reference-layer prediction, when combined, form the reconstructed reference-layer image; up-sampling the reference-layer residual using a first up-sampling operation; up-sampling the reference-layer prediction using a second up-sampling operation different from the first up-sampling operation; generating an inter-layer prediction using the up-sampled reference-layer residual and the up-sampled reference-layer prediction; and reconstructing the enhancement-layer image based upon the inter-layer prediction.

FIG. 5

## Description

### COPYRIGHT NOTICE

### FIELD

The present application generally relates to data compression and, in particular, to methods and devices for scalable video compression.

### BACKGROUND

Data compression occurs in a number of contexts. It is very commonly used in communications and computer networking to store, transmit, and reproduce information efficiently. It finds particular application in the encoding of images, audio and video. Video presents a significant challenge to data compression because of the large amount of data required for each video frame and the speed with which encoding and decoding often needs to occur. The current state-of-the-art for video encoding is the ITU-T H.264/AVC video coding standard. It defines a number of different profiles for different applications, including the Main profile, Baseline profile and others. A next-generation video encoding standard is currently under development through a joint initiative of MPEG-ITU termed High Efficiency Video Coding (HEVC/H.265).

There are a number of standards for encoding/decoding images and videos, including H.264 and HEVC/H.265, that use block-based coding processes. In these processes, the image or frame is partitioned into blocks and the blocks are spectrally transformed into coefficients, quantized, and entropy encoded. In many cases, the data being transformed is not the actual pixel data, but is residual data following a prediction operation. Predictions can be intra-frame, *i. e.* block-to-block within the frame/image, or inter-frame, *i. e.* between frames (also called motion prediction).

When spectrally transforming residual data, many of these standards prescribe the use of a discrete cosine transform (DCT) or some variant thereon. The resulting DCT coefficients are then quantized using a quantizer to produce quantized transform domain coefficients, or indices.

The block or matrix of quantized transform domain coefficients (sometimes referred to as a "transform unit") is then entropy encoded using a particular context model. In H.264/AVC and HEVC/H.265, the quantized transform coefficients are encoded by (a) encoding a last significant coefficient position indicating the location of the last non-zero coefficient in the transform unit, (b) encoding a significance map indicating the positions in the transform unit (other than the last significant coefficient position) that contain non-zero coefficients, (c) encoding the magnitudes of the non-zero coefficients, and (d) encoding the signs of the non-zero coefficients.

Scalable video coding involves encoding a reference layer and an enhancement layer (and, in some cases, additional enhancement layers, some of which may also serve as reference layers). The reference layer is encoded using a given video codec. The enhancement layer is encoded using the same video codec, but the encoding of the enhancement layer may take advantage of information from the reconstructed reference layer to improve its compression. In particular, in the case of spatial scalable video compression (where the reference layer is a scaled-down version of the enhancement layer), a temporally co-located reconstructed reference layer frame may be used as the reference frame for a prediction in the equivalent frame at the enhancement layer. This is termed "inter-layer" prediction.

It would be advantageous to develop scalable video coding and decoding processes that improve compression at the enhancement layer.

### BRIEF SUMMARY

The present application describes methods and encoders/decoders for encoding and decoding residual video data.

In a first aspect, the present application describes a method of reconstructing, in a video decoder, an enhancement-layer image based upon a reconstructed reference-layer image using inter-layer prediction. The method includes reconstructing a reference-layer residual and a reference-layer prediction, wherein the reference-layer residual and the reference-layer prediction, when combined, form the reconstructed reference-layer image; up-sampling the reference-layer residual using a first up-sampling operation; up-sampling the reference-layer prediction using a second up-sampling operation different from the first up-sampling operation; generating an inter-layer prediction using the up-sampled reference-layer residual and the up-sampled reference-layer prediction; and reconstructing the enhancement-layer image based upon the inter-layer prediction.

In yet another aspect, the present application describes a method of reconstructing, in a video decoder, an enhancement-layer image based upon a reconstructed reference-layer image using inter-layer prediction. The method includes reconstructing a reference-layer residual and a reference-layer prediction; combining the reference-layer residual with the reference-layer prediction to obtain the reconstructed reference-layer image; up-sampling the reference-layer residual using a first up-sampling operation; up-sampling the reconstructed reference-layer image using a second up-sampling operation different from the first up-sampling operation; generating an inter-layer prediction using the up-sampled reconstructed reference-layer image; and reconstructing the enhancement-layer image based upon the inter-layer prediction and the up-sampled reference-layer residual.

In a further aspect, the present application describes encoders and decoders configured to implement such methods of encoding and decoding.

In yet a further aspect, the present application describes non-transitory computer-readable media storing computer-executable program instructions which, when executed, configured a processor to perform the described methods of encoding and/or decoding.

Other aspects and features of the present application will be understood by those of ordinary skill in the art from a review of the following description of examples in conjunction with the accompanying figures.

## BRIEF DESCRIPTION OF THE DRAWINGS

Reference will now be made, by way of example, to the accompanying drawings which show example embodiments of the present application, and in which:

Figure 1 shows, in block diagram form, an encoder for encoding video;

Figure 2 shows, in block diagram form, a decoder for decoding video;

Figure 3 shows, in block diagram form, an example of a scalable video encoder;

Figure 4 shows, in block diagram form, an example of a scalable video decoder;

Figure 5 shows, in block diagram form, an example decoding process flow;

Figure 6 shows, in block diagram form, another example decoding process flow;

Figure 7 shows a simplified block diagram of an example embodiment of an encoder; and

Figure 8 shows a simplified block diagram of an example embodiment of a decoder.

Similar reference numerals may have been used in different figures to denote similar components.

## DESCRIPTION OF EXAMPLE EMBODIMENTS

In the description that follows, some example embodiments are described with reference to the H.264 standard for video coding and/or the developing HEVC/H.265 standard. In particular, reference may be made to H.264/SVC for scalable video coding, or a scalable video coding extension to the HEVC/H.265 standard. Those ordinarily skilled in the art will understand that the present application is not limited to H.264/SVC or HEVC/H.265 or any hybrid architecture where the enhancement layer can apply equally to various reference layer formats, but may be applicable to other scalable video coding/decoding standards, including possible future standards, including multi-view coding standards, 3D video coding standards, and reconfigurable video coding standards.

In the description that follows, when referring to video or images the terms frame, picture, slice, tile and rectangular slice group may be used somewhat interchangeably. Those of skill in the art will appreciate that, in the case of the H.264 standard, a frame may contain one or more slices. The term "frame" may be replaced with "picture" in HEVC/H. 265. Other terms may be used in other video coding standards. It will also be appreciated that certain encoding/decoding operations might be performed on a frame-by-frame basis, some are performed on a slice-by-slice basis, some picture-by-picture, some tile-by-tile, and some by rectangular slice group, by coding unit, by transform unit, etc., depending on the particular requirements or terminology of the applicable image or video coding standard. In any particular embodiment, the applicable image or video coding standard may determine whether the operations described below are performed in connection with frames and/or slices and/or pictures and/or tiles and/or rectangular slice groups and/or coding or transform units, as the case may be. Accordingly, those ordinarily skilled in the art will understand, in light of the present disclosure, whether particular operations or processes described herein and particular references to frames, slices, pictures, tiles, rectangular slice groups are applicable to frames, slices, pictures, tiles, rectangular slice groups, or some or all of those for a given embodiment. This also applies to transform units, coding units, groups of coding units, etc., as will become apparent in light of the description below.

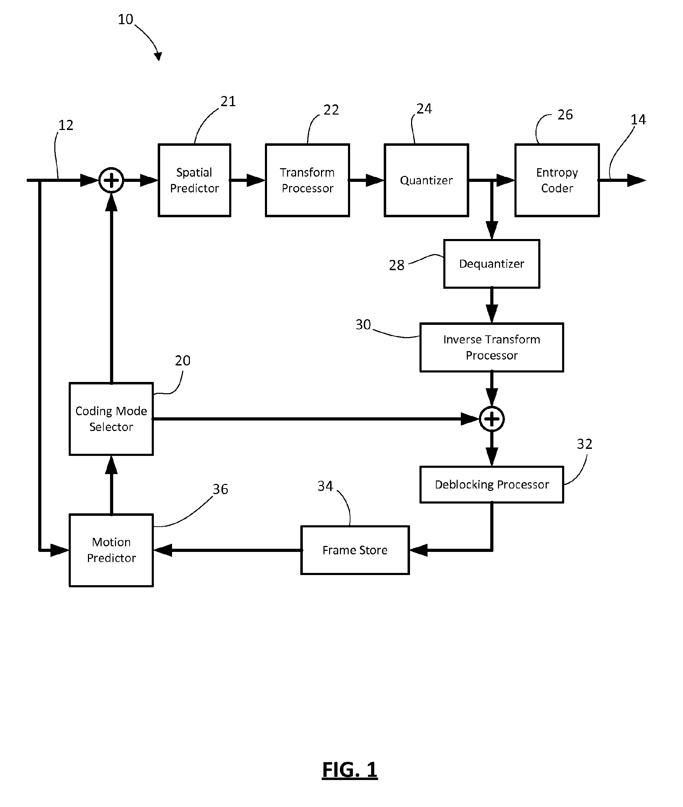

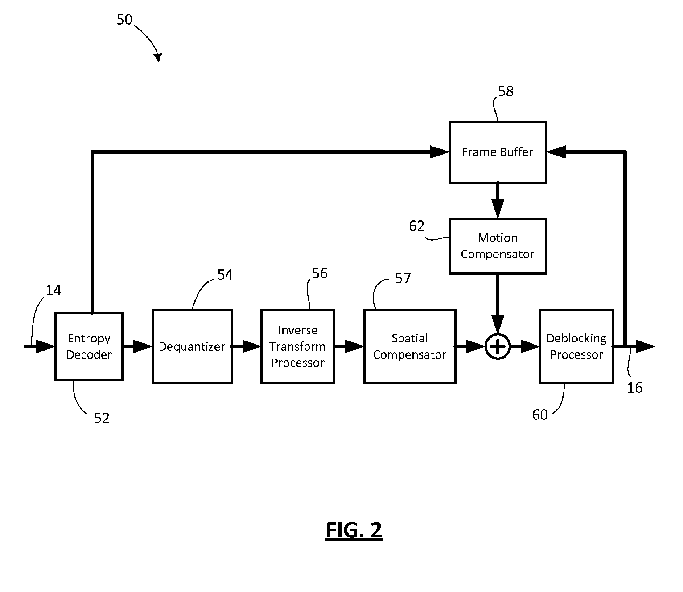

Reference is now made to Figure 1, which shows, in block diagram form, an encoder 10 for encoding video. Reference is also made to Figure 2, which shows a block diagram of a decoder 50 for decoding video. It will be appreciated that the encoder 10 and decoder 50 described herein may each be implemented on an application-specific or general purpose computing device, containing one or more processing elements and memory. The operations performed by the encoder 10 or decoder 50, as the case may be, may be implemented by way of application-specific integrated circuit, for example, or by way of stored program instructions executable by a general purpose processor. The device may include additional software, including, for example, an operating system for controlling basic device functions. The range of devices and platforms within which the encoder 10 or decoder 50 may be implemented will be appreciated by those ordinarily skilled in the art having regard to the following description.

The encoder 10 is a single-layer encoder and the decoder 50 is a single-layer decoder. The encoder 10 receives a video source 12 and produces an encoded bitstream 14. The decoder 50 receives the encoded bitstream 14 and outputs a decoded video frame 16. The encoder 10 and decoder 50 may be configured to operate in conformance with a number of video compression standards. For example, the encoder 10 and decoder 50 may be H.264/AVC compliant. In other embodiments, the encoder 10 and decoder 50 may conform to other video compression standards, including evolutions of the H.264/AVC standard, like HEVC/H.265.

The encoder 10 includes a spatial predictor 21, a coding mode selector 20, transform processor 22, quantizer 24, and entropy encoder 26. As will be appreciated by those ordinarily skilled in the art, the coding mode selector 20 determines the appropriate coding mode for the video source, for example whether the subject frame/slice is of I, P, or B type, and whether particular coding units (e.g. macroblocks, coding units, etc.) within the frame/slice are inter or intra coded. The transform processor 22 performs a transform upon the spatial domain data. In particular, the transform processor 22 applies a block-based transform to convert spatial domain data to spectral components. For example, in many embodiments a discrete cosine transform (DCT) is used. Other transforms, such as a discrete sine transform or others may be used in some instances. The block-based transform is performed on a coding unit, macroblock or sub-block basis, depending on the size of the macroblocks or coding units. In the H.264 standard, for example, a typical 16x16 macroblock contains sixteen 4x4 transform blocks and the DCT process is performed on the 4x4 blocks. In some cases, the transform blocks may be 8x8, meaning there are four transform blocks per macroblock. In yet other cases, the transform blocks may be other sizes. In some cases, a 16x16 macroblock may include a non-overlapping combination of 4x4 and 8x8 transform blocks.

Applying the block-based transform to a block of pixel data results in a set of transform domain coefficients. A "set" in this context is an ordered set in which the coefficients have coefficient positions. In some instances the set of transform domain coefficients may be considered as a "block" or matrix of coefficients. In the description herein the phrases a "set of transform domain coefficients" or a "block of transform domain coefficients" are used interchangeably and are meant to indicate an ordered set of transform domain coefficients.

The set of transform domain coefficients is quantized by the quantizer 24. The quantized coefficients and associated information are then encoded by the entropy encoder 26.

The block or matrix of quantized transform domain coefficients may be referred to herein as a "transform unit" (TU). In some cases, the TU may be non-square, e.g. a non-square quadrature transform (NSQT).

Intra-coded frames/slices (i.e. type I) are encoded without reference to other frames/slices. In other words, they do not employ temporal prediction. However intra-coded frames do rely upon spatial prediction within the frame/slice, as illustrated in Figure 1 by the spatial predictor 21. That is, when encoding a particular block the data in the block may be compared to the data of nearby pixels within blocks already encoded for that frame/slice. Using a prediction algorithm, the source data of the block may be converted to residual data. The transform processor 22 then encodes the residual data. H.264, for example, prescribes nine spatial prediction modes for 4x4 transform blocks. In some embodiments, each of the nine modes may be used to independently process a block, and then rate-distortion optimization is used to select the best mode.

The H.264 standard also prescribes the use of motion prediction/compensation to take advantage of temporal prediction. Accordingly, the encoder 10 has a feedback loop that includes a de-quantizer 28, inverse transform processor 30, and deblocking processor 32. The deblocking processor 32 may include a deblocking processor and a filtering processor. These elements mirror the decoding process implemented by the decoder 50 to reproduce the frame/slice. A frame store 34 is used to store the reproduced frames. In this manner, the motion prediction is based on what will be the reconstructed frames at the decoder 50 and not on the original frames, which may differ from the reconstructed frames due to the lossy compression involved in encoding/decoding. A motion predictor 36 uses the frames/slices stored in the frame store 34 as source frames/slices for comparison to a current frame for the purpose of identifying similar blocks. Accordingly, for macroblocks or coding units to which motion prediction is applied, the "source data" which the transform processor 22 encodes is the residual data that comes out of the motion prediction process. For example, it may include information regarding the reference frame, a spatial displacement or "motion vector", and residual pixel data that represents the differences (if any) between the reference block and the current block. Information regarding the reference frame and/or motion vector may not be processed by the transform processor 22 and/or quantizer 24, but instead may be supplied to the entropy encoder 26 for encoding as part of the bitstream along with the quantized coefficients.

Those ordinarily skilled in the art will appreciate the details and possible variations for implementing video encoders.

The decoder 50 includes an entropy decoder 52, dequantizer 54, inverse transform processor 56, spatial compensator 57, and deblocking processor 60. The deblocking processor 60 may include deblocking and filtering processors. A frame buffer 58 supplies reconstructed frames for use by a motion compensator 62 in applying motion compensation. The spatial compensator 57 represents the operation of recovering the video data for a particular intra-coded block from a previously decoded block.

The bitstream 14 is received and decoded by the entropy decoder 52 to recover the quantized coefficients. Side information may also be recovered during the entropy decoding process, some of which may be supplied to the motion compensation loop for use in motion compensation, if applicable. For example, the entropy decoder 52 may recover motion vectors and/or reference frame information for inter-coded macroblocks.

The quantized coefficients are then dequantized by the dequantizer 54 to produce the transform domain coefficients, which are then subjected to an inverse transform by the inverse transform processor 56 to recreate the "video data". It will be appreciated that, in some cases, such as with an intra-coded macroblock or coding unit, the recreated "video data" is the residual data for use in spatial compensation relative to a previously decoded block within the frame. The spatial compensator 57 generates the video data from the residual data and pixel data from a previously decoded block. In other cases, such as inter-coded macroblocks or coding units, the recreated "video data" from the inverse transform processor 56 is the residual data for use in motion compensation relative to a reference block from a different frame. Both spatial and motion compensation may be referred to herein as "prediction operations".

The motion compensator 62 locates a reference block within the frame buffer 58 specified for a particular inter-coded macroblock or coding unit. It does so based on the reference frame information and motion vector specified for the inter-coded macroblock or coding unit. It then supplies the reference block pixel data for combination with the residual data to arrive at the reconstructed video data for that coding unit/macroblock.

A deblocking/filtering process may then be applied to a reconstructed frame/slice, as indicated by the deblocking processor 60. After deblocking/filtering, the frame/slice is output as the decoded video frame 16, for example for display on a display device. It will be understood that the video playback machine, such as a computer, set-top box, DVD or Blu-Ray player, and/or mobile handheld device, may buffer decoded frames in a memory prior to display on an output device.

It is expected that HEVC/H.265-compliant encoders and decoders will have many of these same or similar features.

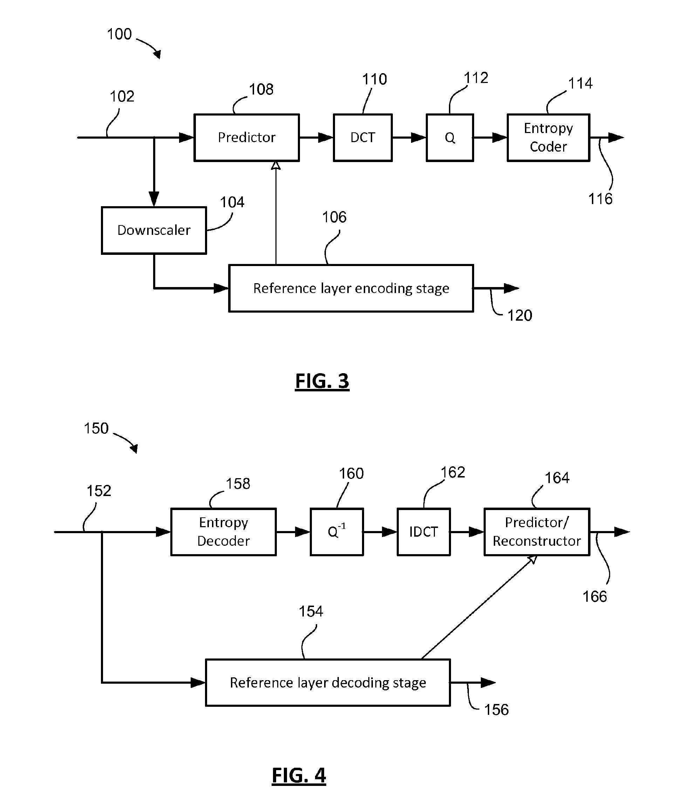

Reference is now made to Figures 3 and 4. Figure 3 shows a simplified block diagram of an example scalable video encoder 100. Figure 4 shows a simplified block diagram of an example scalable video decoder 150. Scalable video may involve one or more types of scalability. The types of scalability include spatial, temporal, quality (PSNR), and format/standard. In the examples given below, the scalable video is spatially scaled video. That is, the reference-layer video is a scaled-down version of the enhancement-layer video. The scale factor may be 2:1 in the x-direction and 2:1 in the y-direction (overall, a scaling of 4:1), 1.5:1 in the x- and y-directions, or any other ratio.

The encoder 100 receives the enhancement resolution video 102. The encoder 100 includes a down-scaler 104 to convert the enhancement resolution video 102 to a reference-layer video. The reference-layer video is then encoded by way of a reference-layer encoding stage 106. The reference-layer encoding stage 106 may be, for example, an HEVC/H.265-compliant encoder that produces reference-layer encoded video 120.

The enhancement-layer video 102 is encoded using a predictor 108, a DCT operator 110, a quantizer 112, and an entropy coder 114. The entropy coder 114 outputs an enhancement-layer encoded video. The difference from single-layer video coding is that data from the reference layer may be used in the predictor 108 to assist in making predictions at the enhancement layer. The predictor 108 may apply intra-prediction, inter-prediction or inter-layer prediction. Inter-layer prediction relies upon reconstructed data from corresponding pixels in the reference layer as a prediction for the pixels in the enhancement layer. The reference-layer image may be up-sampled and the up-sampled image may serve as an enhancement layer prediction. A motion compensation operation may be applied to the up-sampled reference-layer image to produce the inter-layer prediction. In this manner, the inter-layer prediction is somewhat similar to inter-prediction except that the reference frame is not an enhancement-layer frame from another temporal point in the video, but is the up-sampled reference-layer frame from the identical temporal point in the video.

The encoder 100 produces both the reference-layer encoded video 120 and the enhancement-layer encoded video 116. The two encoded videos may be packaged together and/or interleaved in a variety of ways to create a single bitstream, or may be maintained and stored separately, depending on the implementation.

At the decoder 150, scalable encoded video 152 (containing both the reference layer and enhancement layer) is input to a reference-layer decoding stage 154, which is configured to decoder the reference-layer video. It may output reference-layer decoded video 156. The scalable encoded video 152 is also input to an enhancement-layer video decoding stage, which includes an entropy decoder 158, a dequantizer 160, an inverse DCT operator 162, and a predictor/reconstructor 164. As at the encoder, the predictor/reconstructor 164 may rely upon some reconstructed reference-layer pixel data to generate the inter-layer prediction used for reconstruction of pixel values in the enhancement layer. The decoder 150 may output reconstructed enhancement-layer video 166. Similarly, at the decoder 150, data 170 from the base-layer decoding stage 154 may be used for context determination in the entropy decoder 158.

In the following description, $X$ denotes an enhancement-layer frame. The reference-layer frame is given by $x = DS(X)$, wherein $DS()$ represents a down-sampling operation. The reference-layer frame $x$ is encoded by finding a prediction $p$ and encoding its resulting residual $z$, where $x = z + p$. At the decoder (or in the feedback loop at the encoder) the reference-layer frame is reconstructed by decoding the residual $\hat{z}$ and reconstructing the reference-layer frame as $\hat{x} = \hat{z} + p$.

The reconstructed reference-layer frame may be up-sampled to be used in an inter-layer prediction operation, as indicated by up$(\hat{x})$, where up() represents an up-sampling operation. A concern with inter-layer prediction is to ensure that the up-sampling operation and down-sampling operation are closely correlated so that the distortion caused by both operations is minimized:

$$\min_{\mathbf{up}(\cdot)} \left| X - \mathbf{up}\left( DS(X) \right) \right|^2$$

In the case of some video coding processes, a 4-tap finite-impulse response (FIR) filter is used as an up-sampling operator. In particular, the FIR filter selected is based upon a sinc function, and, in one embodiment, is defined by the vector [-3 19 19 -3]. This filter is an interpolation filter applied to the reference-layer data to realize the fractional positions for up-sampling, whereas the reference-layer data is unchanged at the integer positions. Current inter-layer prediction processes in scalable video coding are based upon applying this type of interpolation filter to the reconstructed reference-layer frame $\hat{x}$ in order to realize an up-sampled reconstructed reference-layer frame to serve as the basis for the inter-layer prediction.

In one aspect, the present application addresses a realization that the statistics of the reference-layer prediction $p$ and of the reconstructed reference-layer residual $\hat{z}$ are not the same. Accordingly, in one aspect, the present application describes methods and devices that apply different up-sampling operations to the reference-layer prediction and to the reconstructed reference-layer residual to realize up-sampled reference-layer data that may then be used for inter-layer prediction. In one embodiment, this is realize through applying different interpolation filters to the reference-layer prediction and to the reference-layer residual, and then combining the up-sampled reference layer prediction and the up-sampled reference-layer residual to obtain the up-sampled reconstructed reference layer frame for inter-layer prediction.

### Up-sampling operator selection

In accordance with one aspect of the present application, the up-sampled reconstructed reference frame used for inter-layer prediction is realized as follows:

$$\mathbf{up}(\hat{x}) = \mathbf{up}_p(p) + \mathbf{up}_z(\hat{z})$$

Note that the operators up$_p$() and up$_z$() are not the same. The up-sampling operations may be expressed as follows:

$$\mathbf{up}(\hat{x}) = a \otimes p + c \otimes \hat{z}$$

In this expression, the operator $\otimes$ stands for convolving a tapped filter (e.g. an FIR filter), such as $a$ or $c$, with a pixel frame such as the prediction $p$ or the reconstructed residual $\hat{z}$. In some embodiments, other filters may be used, such as infinite impulse response (IIR) filters, depending on the specific implementation requirements and restrictions. In this example, the up-sampling operator $a$ may be expressed in vector form as $a = [a1, a2, a3, a4][a5, a6, a7]$. In one sense, each of the up-sampling operators may be considered to be two (or more) filters. In this example, the vector $[a1, a2, a3, a4]$ interpolates the up-sampled pixels/data corresponding to a fractional position in the reference-layer and the vector $[a5, a6, a7]$ filters the integer-position pixels/data.

The up-sampling operation using $a$ and $c$ may be expressed in matrix form as follows:

$$\mathbf{up}(\hat{x}) = A * p * B + C * \hat{z} * D$$

In this expression $A$, $B$, $C$, and $D$ are matrices that correspond to the up-sampling operators $a$ and c, and * represents matrix multiplication.

Taking one up-sampling operator as an example, and assuming that the prediction $p$ is of size NxM, the up-sampling of the reference-layer prediction $a \otimes p$ can be implemented by the matrix operation $A_{2NxN} * p * B_{Mx2M}$.

In one example, the matrix $A_{2NxN}$ is structured in accordance with the following table. In this example table, even rows are integer positions, and odd rows correspond to fractional positions. To deal with boundary cases, at the first fraction position, the first integer position is repeated (as the pixel is outside the boundary of the matrix). At the last position (bottom right cell of the table), all the remaining taps are performed.

Table 1 - Example Matrix $A$

| a5+a6 | a7 | 0 | 0 | | | | | | |
|---|---|---|---|---|---|---|---|---|---|
| a1+a2 | a3 | a4 | 0 | | | | | | |
| a5 | a6 | a7 | 0 | | | | | | |
| a1 | a2 | a3 | a4 | 0 | | | | | |
| 0 | a5 | a6 | a7 | | | | | | |
| 0 | a1 | a2 | a3 | a4 | ... | | | | |
| ... | | | | | | | | | |
| | | | | | | | | | |
| | | | | | ... | a1 | a2 | a3 | a4 |
| | | | | | | | a5 | a6 | a7 |
| | | | | | | 0 | a1 | a2 | a3+a4 |
| | | | | | | 0 | a5 | a6+a7 |
| | | | | | | 0 | a1 | a2+a3+a4 |

The example matrix $B_{Mx2M}$ may be structured in accordance with the following table. In this example, even columns correspond to integer positions and odd columns correspond to fractional positions. The same boundary case handling may be applied as discussed above in connection with matrix $A$.

Table 2 - Example Matrix B

| a5+a6 | a1+a2 | a5 | a1 | 0 | | | | | |
|---|---|---|---|---|---|---|---|---|---|
| a7 | a3 | a6 | a2 | a5 | | | | | |
| 0 | a4 | a7 | a3 | a6 | | | | | |
| 0 | 0 | | a4 | a7 | | | | | |
| 0 | 0 | | 0 | | | | | | |
| 0 | | | | | ... | | | | |
| ... | | | | | | | | | |
| | | | | | | | | | |
| | | | | | | | | | |
| | | | | | | a1 | | | |
| | | | | | | a2 | a5 | a1 | |
| | | | | | | a3 | a6 | a2 | a5 | a1 |
| | | | | | | a4 | a7 | a3+a4 | a6+a7 | a2+a3+a4 |

In the above example, an embodiment of the up-sampling operator *a* may be expressed in vector form as *a* = [*a1, a2, a*3, a4][0, 1, 0], that is, *a5* = *a7* = 0 and *a6* = 1. In this case, no filtering is performed for the integer-position pixels/data in the reference layer.

In the above example, it is presumed that there is one horizontal and one vertical filter. In an embodiment in which different prediction directions are used, one of the two matrices would involve different constituent parameters. For example, matrix *B* may be expressed as:

Table 3 - Second Example Matrix *B*

| b5+b6 | b1+b2 | b5 | b1 | 0 | | | | | | |
|---|---|---|---|---|---|---|---|---|---|---|
| b7 | b3 | b6 | b2 | b5 | | | | | | |
| 0 | b4 | b7 | b3 | b6 | | | | | | |
| 0 | 0 | | b4 | b7 | | | | | | |
| 0 | 0 | | 0 | | | | | | | |
| 0 | | | | | | ... | | | | |
| ... | | | | | | | | | | |
| | | | | | | | | | | |
| | | | | | | | | | | |
| | | | | | | | b1 | | | |
| | | | | | | | b2 | b5 | b1 | |
| | | | | | | | b3 | b6 | b2 | b5 | b1 |
| | | | | | | | b4 | b7 | b3+b4 | b6+b7 | b2+b3+b4 |

In this case, assuming that the prediction is sized *NxM*, and that a = [a1 a2 a3 a4] [a5 a6 a7] and b = [b1 b2 b3 b4] [b5 b6 b7], then the up-sampling may be considered in two steps as:

$$p' = a \overset{\Box}{\underset{\Box}{\bigotimes}} p(\text{columns})$$

$$\text{up}_p(\text{p}) = b \overset{\Box}{\underset{\Box}{\bigotimes}} p'(\text{rows})$$

This indicates first convolving [*a5 a6 a7*] with all columns of *p* to realize the even rows of *p'* and convolving [*a1 a2 a3 a4*] with all columns of *p* to realize the odd rows of *p'*.

The up-sampling up_p(p) = *A * p * B* is then realized through:

$$b \overset{\Box}{\underset{\Box}{\bigotimes}} p'(\text{rows})$$

This expression indicates convolving [*b5 b6 b7*] with all rows of *p'* to realize the even columns of up_p(p) and [*b1 b2 b3 b4*] with all rows of *p'* to realize the odd columns of up_p(p).

The parameters for the matrices *A, B, C,* and *D* may be selected on the basis of the following minimization:

$$\min_{a,c}|X - A * p * B - C * \hat{z} * D|^2$$

This minimization problem may be solved through use of a gradient descent algorithm in some implementations, given $X$, $p$, and $\hat{z}$.

In some implementations parameters that satisfy the minimization expression above are found offline using multiple iterations and a criterion of convergence. The parameters may be signaled from the encoder to the decoder in the bitstream, such as in an SEI message or within a header, such as a frame header, picture header, or slice header. In some implementations, the signaling of the parameters of the up-sampling filters for the reconstructed reference-layer residual may depend on the parameters of the up-sampling filters for the reference-layer prediction, or vice versa. For example, the parameters of one set of filters may be signaled as the difference to the parameters of the other set of filters. In another example, a flag may be signaled. When the flag is '1', it indicates that the two up-sampling filters are the same and only one set of parameters is signaled, and '0' otherwise.

In another implementation, a plurality of fixed sets of parameters may be determined offline and stored in the encoder and decoder. A fast algorithm may be used to select between the available fixed sets of parameters. The selection may be signaled from the encoder to the decoder in the bitstream, such as in an SEI message or within a header, such as a frame header, picture header, or slice header. Other signaling mechanism may also be used. In some cases, the fast algorithm may be based on an evaluation that the decoder is able to perform independently, such that the selection of the fixed set need not be signaled in the bitstream.

In one embodiment, up-sampling operations $a$ and c are each implemented as two filters, one for interpolating fractional positions and one for filtering integer positions. In an example implementation, the up-sampling operations are defined as:

$$a = [-1.5\ 19\ 19\ -1.5]\ [2\ 12\ 2]$$

$$c = [0 \quad 19 \quad 19 \quad 0]\ [2\ 12\ 2]$$

In this example implementation, the 3-tap filter is applied to reference-layer data to realize the corresponding data points of the up-sampled frame (prediction or residual as the case may be) and the 4-tap interpolation filters are applied to the reference-layer data to realize the interpolated data points of the up-sampled frame. It will be appreciated that longer filters with more taps may be designed by using the same approach and applied for interpolation.

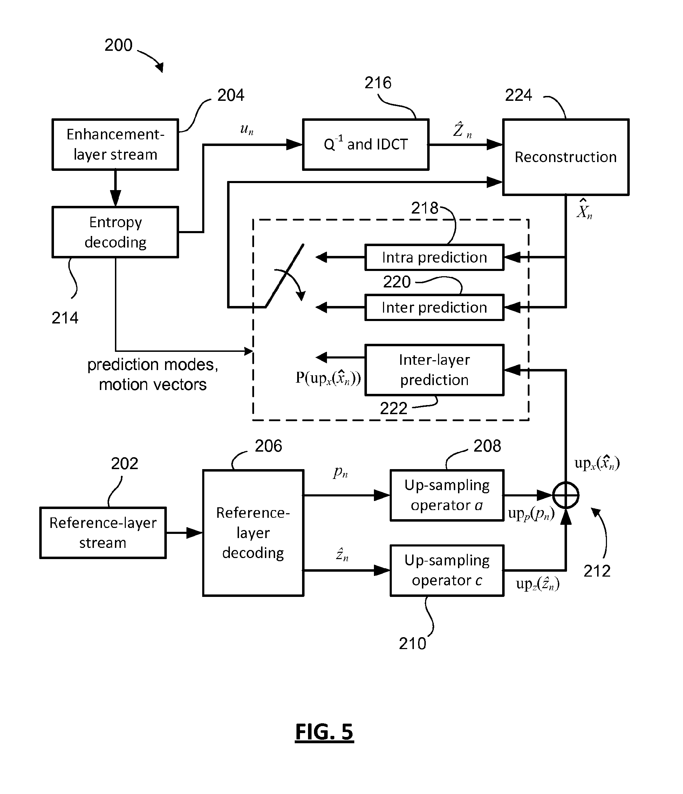

Reference is now made to Figure 5, which shows, in block diagram form, a simplified scalable video decoding process 200 in accordance with one aspect of the present application. In this example, the decoding process 200 includes receiving the reference-layer stream 202 and receiving the enhancement-layer stream 204. The index $n$ indicates the current frame/picture/image. In operation 206, the reference-layer stream is decoded using reference-layer decoding to realize a prediction $p_n$ and a reconstructed residual $\hat{z}_n$. The prediction $p_n$ is subjected to a first up-sampling operation 208 to produce $\text{up}_p(p_n)$, and the reconstructed residual $\hat{z}_n$ is subjected to a second up-sampling operation 210 to produce $\text{up}_z(\hat{z}_n)$, where $\text{up}_p() \neq \text{up}_z()$. The up-sampled prediction and up-sampled reconstructed residual are then combined in operation 212 to produce the up-sampled reconstructed reference-layer image $\text{up}_x(\hat{x}_n)$. As will be appreciated by those skilled in the art, the combining of a predicted frame with a residual may involve the adding/summing of pixel data at corresponding positions in the frame.

At the enhancement layer, the enhancement-layer bitstream is entropy decoded 214 to obtain reconstructed coefficients $u_n$ and related data, such as prediction modes and motion vectors. The coefficients are inverse quantized and inverse transformed 216 to produce reconstructed enhancement-layer residual $\hat{Z}_n$.

The enhancement-layer predictions include three possible types: intra prediction 218 which relies upon current reconstructed enhancement-layer image $\hat{X}_n$, inter-prediction 220 which relies upon previously reconstructed enhancement-layer images $\hat{X}_{n-1}\ \hat{X}_{n-z}$, ..., and inter-layer prediction 222 which relies upon the up-sampled reconstructed reference-layer image $\text{up}_x(\hat{x}_n)$.

The selected prediction for the current block/frame/picture, is input to a reconstruction operation 224 as the prediction $P_n$, which, together with the reconstructed enhancement-layer residual $\hat{Z}n$, is used to generate the reconstructed enhancement-layer image $X_n$.

### *Inter-layer* prediction using *up-sampled* residuals

In accordance with another aspect of the present application, it is noted that there is a general correlation between the reference-layer residual and the enhancement-layer inter-layer prediction residual. Accordingly, in this aspect of the present application the reference-layer residuals are taken into account in the inter-layer motion prediction process. The inter-layer motion prediction process may use separately up-sampled prediction and residual, as described above, or may use the conventional up-sampled reconstructed reference layer frame. In the examples described below, the conventional up-sampled reconstructed reference layer frame will be used in the inter-layer prediction process, but it will be appreciated that in other examples the inter-layer prediction process may use the separately up-sampled prediction and residual as described above.

In this example, the reconstructed reference-layer frame, $\hat{x} = \hat{z} + p$, is up-sampled using $up_x()$ to become $up_x(\hat{x})$. The reconstructed reference-layer residual, $\hat{z}$, is up-sampled using $up_z()$ to become $up_z(\hat{z})$. The motion prediction process within inter-layer prediction is then:

$$Z = X - \mathrm{P}(up_x(\hat{x}),\, v) - up_z(\hat{z})$$

In this expression, Z are the enhancement-layer residuals, X is the original enhancement-layer frame, and P() is the motion prediction operation using motion vector v. Note that because the reference-layer residuals correlate to the enhancement-layer inter-prediction residuals, the reference-layer residuals are up-sampled and then subtracted from the residuals that would otherwise result, thereby leaving enhancement-layer residuals that might be expected to be smaller in magnitude and therefore more compression efficient. In other words, the up-sampled reference-layer residual is used an approximation of the enhancement-layer inter-prediction residual.

At the decoder, the reconstruction process may be expressed as:

$$\hat{\hat{X}} = \mathrm{P}(up_x(\hat{x}),\, v) + \hat{\hat{Z}} + up_z(\hat{z})$$

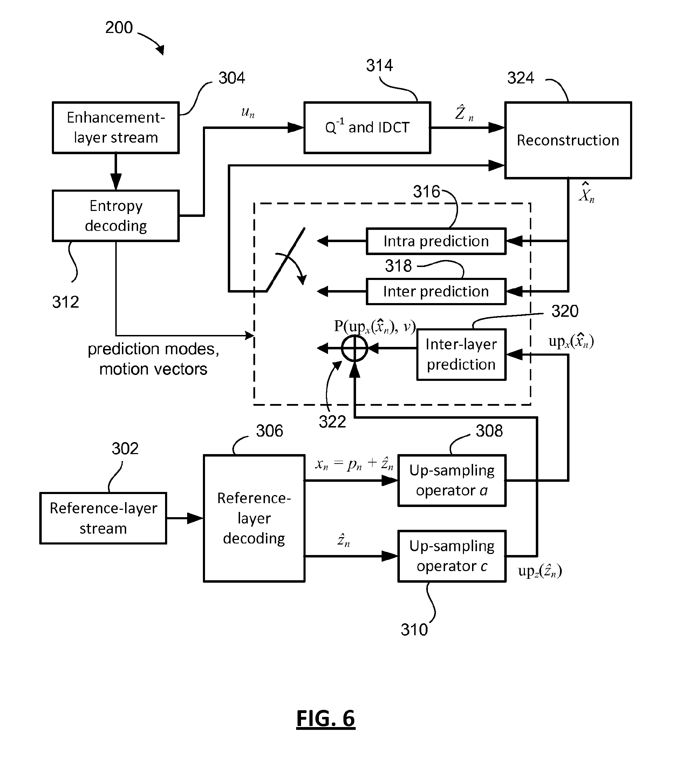

Reference is now made to Figure 6, which shows, in block diagram form, a simplified scalable video decoding process 300 in accordance with one aspect of the present application. In this example, the decoding process 300 includes receiving the reference-layer stream 302 and receiving the enhancement-layer stream 304. The index n indicates the current frame/picture/image. In operation 306, the reference-layer stream is decoded using single-layer decoding to realize a prediction $p_n$ and a reconstructed residual $\hat{z}_n$. The reconstructed reference-layer frame $x_n$ is generated as the sum of the prediction $p_n$ and the reconstructed residual $\hat{z}_n$. The reconstructed reference-layer frame $x_n$ is subjected to a first up-sampling operation 308 to produce $up_x(\hat{x}_n)$, and the reconstructed residual $\hat{z}_n$ is subjected to a second up-sampling operation 310 to produce $up_z(\hat{z}_n)$, where $up_x() \neq up_z()$.

At the enhancement layer, the enhancement-layer bitstream is entropy decoded 312 to obtain reconstructed coefficients $u_n$ and related data, such as prediction modes and motion vectors. The coefficients are inverse quantized and inverse transformed 314 to produce reconstructed enhancement-layer residual $\hat{Z}_n$. The enhancement-layer prediction options include intra prediction 316, inter-prediction 318, and inter-layer prediction 220 which relies upon the up-sampled reconstructed reference-layer image $up_x(\hat{x}_n)$. In operation 222, however, the prediction output from the inter-layer prediction 220, $\mathrm{P}(up_x(\hat{x}), v)$, is added to the up-sampled reference-layer residual $up_z(\hat{z}_n)$ before being input to the reconstruction operation 324. Thus the reconstruction operation 324, in the case of inter-layer prediction, generates the reconstructed enhancement-layer image $\hat{X}n$ as the sum of the reconstructed enhancement-layer residual $\hat{Z}n$, the inter-layer prediction $\mathrm{P}(up_x(\hat{x}), v)$, and the up-sampled reference-layer residual $up_z(\hat{z}_n)$.

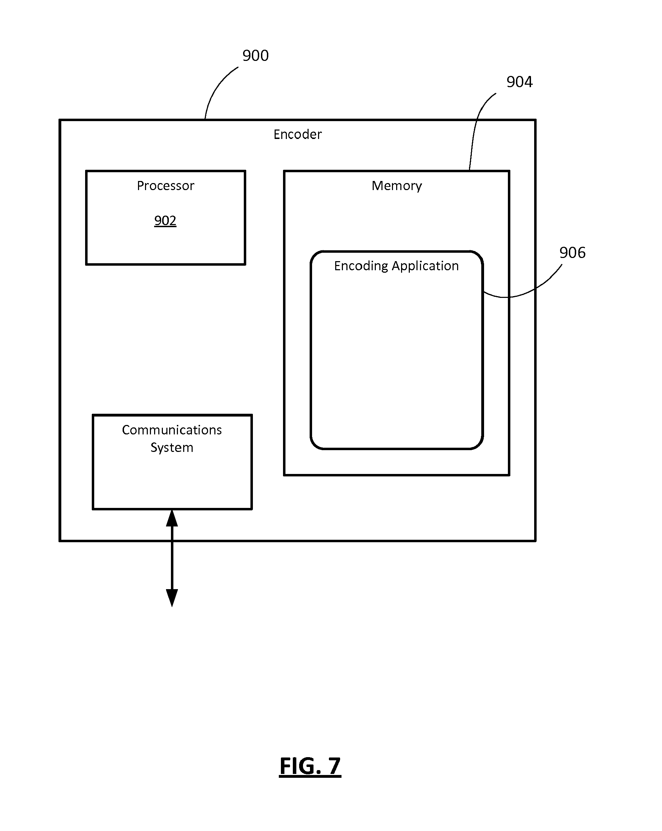

Reference is now made to Figure 7, which shows a simplified block diagram of an example embodiment of an encoder 900. The encoder 900 includes a processor 902, memory 904, and an encoding application 906. The encoding application 906 may include a computer program or application stored in memory 904 and containing instructions for configuring the processor 902 to perform operations such as those described herein. For example, the encoding application 906 may encode and output a bitstream encoded in accordance with the processes described herein. It will be understood that the encoding application 906 may be stored in on a computer readable medium, such as a compact disc, flash memory device, random access memory, hard drive, etc.

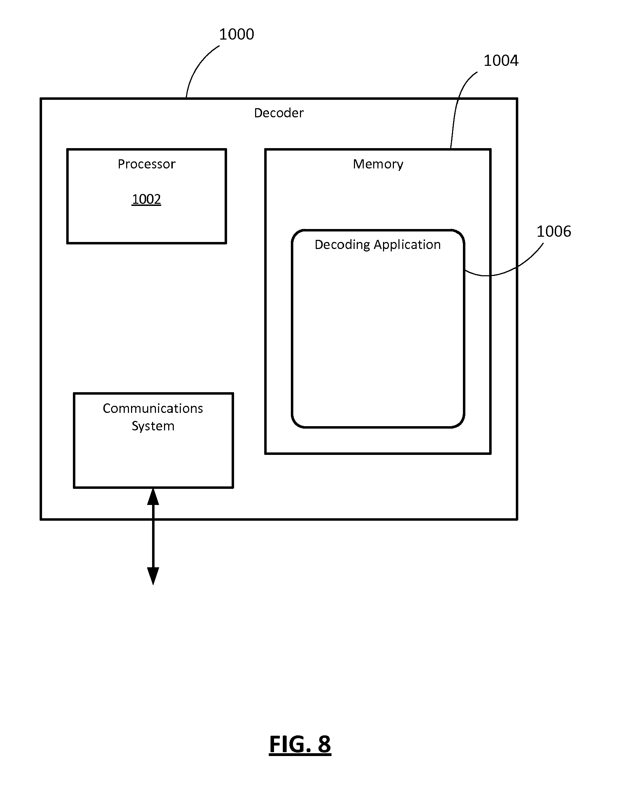

Reference is now also made to Figure 8, which shows a simplified block diagram of an example embodiment of a decoder 1000. The decoder 1000 includes a processor 1002, a memory 1004, and a decoding application 1006. The decoding application 1006 may include a computer program or application stored in memory 1004 and containing instructions for configuring the processor 1002 to perform operations such as those described herein. It will be understood that the decoding application 1006 may be stored in on a computer readable medium, such as a compact disc, flash memory device, random access memory, hard drive, etc.

It will be appreciated that the decoder and/or encoder according to the present application may be implemented in a number of computing devices, including, without limitation, servers, suitably-programmed general purpose computers, audio/video encoding and playback devices, set-top television boxes, television broadcast equipment, and mobile devices. The decoder or encoder may be implemented by way of software containing instructions for configuring a processor to carry out the functions described herein. The software instructions may be stored on any suitable non-transitory computer-readable memory, including CDs, RAM, ROM, Flash memory, etc.

It will be understood that the encoder described herein and the module, routine, process, thread, or other software component implementing the described method/process for configuring the encoder may be realized using standard computer programming techniques and languages. The present application is not limited to particular processors, computer languages, computer programming conventions, data structures, other such implementation details. Those skilled in the art will recognize that the described processes may be implemented as a part of computer-executable code stored in volatile or non-volatile memory, as part of an application-specific integrated chip (ASIC), etc.

Certain adaptations and modifications of the described embodiments can be made. Therefore, the above discussed embodiments are considered to be illustrative and not restrictive.

**Claims**

1. A method of reconstructing, in a video decoder, an enhancement-layer image based upon a reconstructed reference-layer image using inter-layer prediction, the method comprising:

    reconstructing a reference-layer residual and a reference-layer prediction, wherein the reference-layer residual and the reference-layer prediction, when combined, form the reconstructed reference-layer image;
    up-sampling the reference-layer residual using a first up-sampling operation;
    up-sampling the reference-layer prediction using a second up-sampling operation different from the first up-sampling operation;
    generating an inter-layer prediction using the up-sampled reference-layer residual and the up-sampled reference-layer prediction; and
    reconstructing the enhancement-layer image based upon the inter-layer prediction.

2. The method claimed in claim 1, wherein generating an inter-layer prediction comprises combining the up-sampled reference-layer residual with the up-sampled reference-layer prediction to obtain an up-sampled reconstructed reference-layer image and applying motion compensation to produce the inter-layer prediction.

3. The method claimed in claim 1 or claim 2, wherein up-sampling the reference-layer residual using a first up-sampling operation comprises applying a first filter and a second filter to the reference-layer residual, and wherein the second filter comprises an interpolation filter.

4. The method claimed in claim 3, wherein up-sampling the reference-layer prediction using a second up-sampling operation comprises applying a third filter and a fourth filter to the reference-layer prediction, and wherein the fourth filter comprises an interpolation filter different from the second filter.

5. The method claimed in claim 4, wherein applying the first filter produces integer positions of the up-sampled reference-layer residual, applying the second filter produces fractional positions of the up-sampled reference-layer residual, applying the third filter produces integer positions of the up-sampled reference-layer prediction, and applying the fourth filter produces fractional positions of the up-sampled reference-layer prediction.

6. The method claimed in claim 4 or claim 5, wherein the first filter is a 4-tap filter corresponding to the vector [-1.5 19 19 -1.5], the second filter is a 3-tap filter corresponding to the vector [2 12 2], the third filter is a 4-tap filter corresponding to the vector [0 19 19 0], and the fourth filter is a 3-tap filter corresponding to the vector [2 12 2].

7. The method claimed in claim 1 or claim 2, wherein up-sampling the reference-layer residual using a first up-sampling operation comprises applying a first interpolation filter and wherein up-sampling the reference-layer prediction using a second up-sampling operation comprises applying a second interpolation filter different from the first interpolation filter.

8. The method claimed in claim 7, further comprising determining the filter parameters for the first interpolation filter and for the second interpolation filter.

9. A method of reconstructing, in a video decoder, an enhancement-layer image based upon a reconstructed reference-layer image using inter-layer prediction, the method comprising:

    reconstructing a reference-layer residual and a reference-layer prediction;

combining the reference-layer residual with the reference-layer prediction to obtain the reconstructed reference-layer image;

up-sampling the reference-layer residual using a first up-sampling operation;

up-sampling the reconstructed reference-layer image using a second up-sampling operation different from the first up-sampling operation;

generating an inter-layer prediction using the up-sampled reconstructed reference-layer image; and

reconstructing the enhancement-layer image based upon the inter-layer prediction and the up-sampled reference-layer residual.

10. The method claimed in claim 10, generating an inter-layer prediction comprises applying motion compensation to the up-sampled reference-layer image, and wherein reconstructing the enhancement-layer image includes combining an enhancement-layer residual with the inter-layer prediction and adding the up-sampled reference-layer residual.

11. A decoder for decoding a bitstream of encoded video to reconstruct a block of residuals, the decoder comprising:

a processor;

a memory; and

a decoding application stored in memory and containing instructions for configuring the processor to perform the method claimed in any one of claims 1 to 10.

12. A non-transitory processor-readable medium storing processor-executable instructions which, when executed, configure one or more processors to perform the method claimed in any one of claims 1 to 10.

**FIG. 1**

50

58

Frame Buffer

62

Motion
Compensator

14

54          56          57

Entropy
Decoder

Dequantizer

Inverse
Transform
Processor

Spatial
Compensator

⊕

Deblocking
Processor

16

52

60

**FIG. 2**

100

102

108
Predictor

110
DCT

112
Q

114
Entropy Coder

116

104
Downscaler

106
Reference layer encoding stage

120

**FIG. 3**

150

152

158
Entropy Decoder

160
Q⁻¹

162
IDCT

164
Predictor/ Reconstructor

166

154
Reference layer decoding stage

156

**FIG. 4**

**FIG. 5**

**FIG. 6**

900

904

Encoder

Processor

902

Memory

Encoding Application

906

Communications
System

**FIG. 7**

1000

1004

## Decoder

Processor

1002

Memory

Decoding Application

1006

Communications
System

**FIG. 8**